# EUROPEAN PATENT APPLICATION

(11) **EP 4 446 099 A1**
(43) Date of publication of application: **16.10.2024**
(21) Application number: 24161659.8
(22) Date of filing: 06.03.2024
(51) Int. Cl.: B29C 70/44, B30B 15/02

(54) **COMPLIANT STAMPING TOOLS, SYSTEMS AND METHODS FOR STAMP FORMING A WORKPIECE**

(30) Priority: 12.04.2023 US 202318299172
(71) Applicant: The Boeing Company, Arlington, VA 22202 (US)
(72) Inventor: Hickman, Gregory J., Arlington, 22202 (US); Matlack, Michael P., Arlington, 22202 (US); Morrissey, Emma L., Arlington, 22202 (US); Lloyd, Evan, Arlington, 22202 (US); Gutknecht, Andrew, Arlington, 22202 (US)
(74) Representative: Arnold & Siedsma

(57) **Abstract**

A compliant stamping tool for stamp forming a workpiece includes a support structure, a fluid and a deformable membrane. The support structure includes a support wall spaced from a stamping axis. The support wall defines a chamber with an opening. The fluid is disposed within the chamber. The deformable membrane is secured to the support wall, covers the opening and seals the fluid within the chamber. The deformable membrane defines a compliant stamping surface configured to oppose different non-compliant stamping surfaces of opposing stamping tools. A system for stamp forming a workpiece includes a first stamping tool and the compliant stamping tool. The first stamping tool defines a first non-compliant stamping surface extending from the stamping axis. A method for stamp forming a workpiece is also provided.

## Description

### FIELD

The present disclosure relates generally to stamp forming a workpiece and, particularly, to using a compliant stamping tool for stamp forming a workpiece. The compliant stamping tool, for example, includes a compliant stamping surface configured to oppose different non-compliant stamping surfaces of other stamping tools. Various materials are contemplated for the fluid, the deformable membrane and the workpiece. Likewise, stamp forming using various pressures, temperatures and control mechanisms are also contemplated.

### BACKGROUND

The current stamp forming of workpieces (e.g., parts) is centered on matched metal die sets, but efforts to scale to larger part sizes presents several challenges associated with the use of such die sets. Variations in material thickness coupled with tool fabrication tolerances often result in nonuniform pressure distribution over the part surface. The pressure variation can produce a manufacturing environment conducive to low material consolidation and subsequent void formation, a significant detriment to part performance. This is typically overcome by increasing stamping pressure. However, increased pressure can lead to excessive part thinning and is impractical for large-scale articles. To improve part quality and improve producibility of large-scale parts, a compliant tool surface is desirable. Boeing currently uses an elastomeric material to fabricate one side of the stamp form die (SFD) tool to achieve more uniform surface pressures. However, the demanding thermal and mechanical environment encountered during part consolidation results in rapid deterioration of the elastomeric inserts. Typical inserts survive less than ten stamp forming cycles. Moreover, the replacement of SFD tooling is expensive and time consuming.

Accordingly, those skilled in the art continue with research and development efforts to improve the design of stamp forming tools, particularly compliant stamping tools.

### SUMMARY

Disclosed are examples of compliant stamping tools, systems and methods for stamp forming a workpiece. The following is a non-exhaustive list of examples, which may or may not be claimed, of the subject matter according to the present disclosure.

In an example, the disclosed compliant stamping tool for stamp forming a workpiece includes a support structure, a fluid and a deformable membrane. The support structure has a thickness along a stamping axis. The support structure includes a support wall spaced from the stamping axis. The support wall defines a chamber with an opening. The fluid is disposed within the chamber. The deformable membrane is secured to the support wall, covers the opening and seals the fluid within the chamber. The deformable membrane defines a compliant stamping surface configured to oppose different non-compliant stamping surfaces of opposing stamping tools.

Optionally, the support wall of the support structure defines a depth for the chamber along the stamping axis.

Optionally, an inner surface of the support wall defines peripheral limits of the chamber and the opening.

Optionally, the compliant stamping surface defined by the deformable membrane extends outward from the stamping axis.

Optionally, the fluid comprises at least one of rubber particles, silicone rubber particles, urethane rubber particles, natural rubber particles, styrene-butadiene rubber particles, a colloidal suspension, a paste, a gas, dry air, an inert gas, a nitrogen gas, a liquid, a water-based liquid, a mineral-based oil, a synthetic-based oil, a particulate liquid, solid particles, metal particles, plastic particles and mineral particles.

Optionally, the deformable membrane comprises at least one of a rubber material, a thermoplastic elastomer material, a thermoplastic composite material, a thermoset composite material, a reinforced polyimide, a fiber reinforced elastomeric material, a fiberglass material, a silicone material, a particulate filler, reinforcement fibers, metal fibers, short fibers, chopped fibers and a rubber matrix material.

Optionally, the deformable membrane is replaceable.

Optionally, the workpiece comprises a thermoplastic composite material with reinforcement fibers embedded in a thermoplastic matrix material.

Optionally, the compliant stamping tool further comprises a mounting hardware securing the deformable membrane to a support surface of the support wall in conjunction with the deformable membrane covering the opening of the chamber and sealing the fluid within the chamber. Preferably, he mounting hardware includes at least one of a clamp, a bracket, a plate, a snap ring, a fastener, a bolt, a screw, a threaded stud and a nut.

In an example, the disclosed system for stamp forming a workpiece includes the compliant stamping tool according to the above example, optionally with any of the above optional features. The system further includes a first stamping tool having a thickness along the stamping axis and defining a first non-compliant stamping surface.

Optionally, the first non-compliant stamping surface extends outward from the stamping axis.

Optionally, the deformable membrane of the compliant stamping tool is configured to conform to the first non-compliant stamping surface and the fluid is configured to displace in response to engagement of the first non-compliant stamping surface and the compliant stamping surface with the workpiece.

Optionally, the system further comprises a second stamping tool having a thickness along the stamping axis and defining a second non-compliant stamping surface, the second non-compliant stamping surface being different from the first non-compliant stamping surface, wherein the compliant stamping surface of the deformable membrane is configured to oppose the second non-compliant stamping surface of the second stamping tool. Preferably, the second non-compliant stamping surface extends outward from the stamping axis. Preferably, the deformable membrane of the compliant stamping tool is configured to conform to the second non-compliant stamping surface and the fluid is configured to displace in response to engagement of the second non-compliant stamping surface and the compliant stamping surface with the workpiece.

In an example, the disclosed system for stamp forming a workpiece includes a first stamping tool and a compliant stamping tool. The first stamping tool has a thickness along a stamping axis. The first stamping tool defines a first non-compliant stamping surface extending from the stamping axis. The compliant stamping tool has a thickness along the stamping axis. The compliant stamping tool includes a support structure, a fluid and a deformable membrane. The support structure has a thickness along the stamping axis. The support structure includes a support wall spaced from the stamping axis. The support wall defines a chamber with an opening. The fluid is disposed within the chamber. The deformable membrane is secured to the support wall, covers the opening and seals the fluid within the chamber. The deformable membrane defines a compliant stamping surface opposing the first non-compliant stamping surface.

Optionally, the support wall of the support structure defines a depth for the chamber along the stamping axis.

Optionally, an inner surface of the support wall defines peripheral limits of the chamber and the opening.

Optionally, the first non-compliant stamping surface extends outward from the stamping axis.

Optionally, the compliant stamping surface defined by the deformable membrane extends outward from the stamping axis.

Optionally, the fluid comprises at least one of rubber particles, silicone rubber particles, urethane rubber particles, natural rubber particles, styrene-butadiene rubber particles, a colloidal suspension, a paste, a gas, dry air, an inert gas, a nitrogen gas, a liquid, a water-based liquid, a mineral-based oil, a synthetic-based oil, a particulate liquid, solid particles, metal particles, plastic particles and mineral particles.

Optionally, the deformable membrane comprises at least one of a rubber material, a thermoplastic elastomer material, a thermoplastic composite material, a thermoset composite material, a reinforced polyimide, a fiber reinforced elastomeric material, a fiberglass material, a silicone material, a particulate filler, reinforcement fibers, metal fibers, short fibers, chopped fibers and a rubber matrix material.

Optionally, the deformable membrane is replaceable.

Optionally, the workpiece comprises a thermoplastic composite material with reinforcement fibers embedded in a thermoplastic matrix material. Preferably, the workpiece is preheated to at least a predetermined melting temperature of the thermoplastic matrix material of the workpiece. Preferably, the system comprises at least one heater configured to preheat the first stamping tool and the compliant stamping tool to a predetermined solidification temperature of the thermoplastic matrix material of the workpiece. Preferably, approximating of the first stamping tool and the compliant stamping tool is performed at a predetermined pressure for consolidation of the thermoplastic composite material between the first non-compliant stamping surface of the first stamping tool and the compliant stamping surface of the deformable membrane, wherein the predetermined pressure is preferably at least one of about 2757.9 kPa (about 400 psi) or higher, about 2068.4 kPa (about 300 psi) or higher, about 1378.9 kPa (about 200 psi) or higher, and about 689.5 kPa (about 100 psi) or higher.

Optionally, the compliant stamping tool further comprises: a mounting hardware securing the deformable membrane to a support surface of the support wall in conjunction with the deformable membrane covering the opening of the chamber and sealing the fluid within the chamber. Preferably, the mounting hardware includes at least one of a clamp, a bracket, a plate, a snap ring, a fastener, a bolt, a screw, a threaded stud and a nut.

Optionally, the deformable membrane of the compliant stamping tool is configured to conform to the first non-compliant stamping surface and the fluid is configured to displace in response to engagement of the first non-compliant stamping surface and the compliant stamping surface with the workpiece.

Optionally, the system further comprises a second stamping tool having a thickness along the stamping axis and defining a second non-compliant stamping surface, the second non-compliant stamping surface being different from the first non-compliant stamping surface, wherein the compliant stamping surface of the deformable membrane is configured to oppose the second non-compliant stamping surface of the second stamping tool. Preferably, the second non-compliant stamping surface extends outward from the stamping axis. Preferably, the deformable membrane of the compliant stamping tool is configured to conform to the second non-compliant stamping surface and the fluid is configured to displace in response to engagement of the second non-compliant stamping surface and the compliant stamping surface with the workpiece.

In an example, the disclosed method for stamp forming a workpiece includes: positioning the workpiece between a first stamping tool defining a first non-compliant stamping surface and a compliant stamping tool opposing the first stamping tool, the compliant stamping tool having a deformable membrane defining a compliant stamping surface opposing the first non-compliant stamping surface; compressing the workpiece between the first non-compliant stamping surface and the compliant stamping surface in response to the first stamping tool and the compliant stamping tool being approximated; deforming the compliant stamping surface of the deformable membrane based on a geometry of the first non-compliant stamping surface of the first stamping tool; partially displacing the fluid based on the geometry of the first non-compliant stamping surface; and deforming the workpiece based on the geometry of the first non-compliant stamping surface, the deformed compliant stamping surface and the partially displaced fluid.

Optionally, the compliant stamping tool opposes the first stamping tool along a stamping axis.

Optionally, the compliant stamping tool comprises a support structure with a support wall spaced from the stamping axis, the support wall defining a chamber with an opening, the compliant stamping tool further comprising a fluid disposed within the chamber and the deformable membrane secured to the support wall, covering the opening and sealing the fluid within the chamber, the first stamping tool defining the first non-compliant stamping surface and the deformable membrane defining the compliant stamping surface. Preferably, the geometry of the first non-compliant stamping surface comprises at least one of a flat portion, a contour portion, a protruding portion, a ramping portion, a declining portion, a stepping portion and a convex portion.

Optionally, the deforming of the compliant stamping surface, the partial displacing of the fluid and the deforming of the workpiece are in response to reaching a predetermined pressure during the compressing. Preferably, the predetermined pressure is at least one of about 2757.9 kPa (about 400 psi) or higher, about 2068.4 kPa (about 300 psi) or higher, about 1378.9 kPa (about 200 psi) or higher, and about 689.5 kPa (about 100 psi) or higher.

Optionally, the workpiece comprises a thermoplastic composite material with reinforcement fibers embedded in a thermoplastic matrix material. Preferably, the method further comprises preheating the workpiece to at least a predetermined melting temperature of the thermoplastic matrix material. Further preferably, the predetermined melting temperature ranges between at least one of about 300° C and about 500° C, about 300° C and about 400° C and about 300° C and about 360° C. Preferably, preheating the first stamping tool and the compliant stamping tool to a predetermined solidification temperature for the thermoplastic matrix material, preferably wherein the predetermined solidification temperature ranges between at least one of about 200° C and about 300° C and about 250° C and about 300° C. Preferably, the method further comprises consolidating the workpiece in response to reaching a predetermined pressure during the compressing, preferably wherein the predetermined pressure is at least one of about 2757.9 kPa (about 400 psi) or higher, about 2068.4 kPa (about 300 psi) or higher, about 1378.9 kPa (about 200 psi) or higher, and about 689.5 kPa (about 100 psi) or higher.

Optionally, the method further comprises separating the first stamping tool and the compliant stamping tool to release the workpiece; and removing the workpiece from between the first non-compliant stamping surface and the compliant stamping surface.

In an example, the disclosed method for stamp forming a workpiece includes placing the workpiece between a first stamping tool and a deformable membrane; and forming the workpiece between the first stamping tool which is non-compliant and the deformable membrane which is compliant.

Optionally, the forming of the workpiece is based at least in part on using hydrostatic pressure in conjunction with the deformable membrane to ensure uniform surface pressure distributions on the workpiece.

Optionally, the deformable membrane is reconfigurable which enables use of the deformable membrane with multiple non-compliant geometries of the first stamping tool.

In an example, the disclosed method for stamp forming a workpiece includes:
(1) positioning the workpiece between a first stamping tool and a compliant stamping tool opposing the first stamping tool along a stamping axis, wherein the compliant stamping tool comprises a support structure with a support wall spaced from the stamping axis, the support wall defining a chamber with an opening, the compliant stamping tool further comprising a fluid disposed within the chamber and a deformable membrane secured to the support wall, covering the opening and sealing the fluid within the chamber, the first stamping tool defining a first non-compliant stamping surface and the deformable membrane defining a compliant stamping surface opposing the first non-compliant stamping surface; and (2) compressing the workpiece between the first non-compliant stamping surface and the compliant stamping surface in response to the first stamping tool and the compliant stamping tool being approximated.

Other examples of the disclosed compliant stamping tools, systems and methods for stamp forming a workpiece will become apparent from the following detailed description, the accompanying drawings and the appended claims.

### BRIEF DESCRIPTION OF THE DRAWINGS

Fig. 1 is a cross-sectional view of an example of a system for stamp forming a workpiece;
Fig. 2 is an exploded view of another example of a system for stamp forming a workpiece;
Fig. 3 is a view of an example of a compliant stamping surface of a compliant stamping tool for stamp forming a workpiece;
Fig. 4 is a cross-sectional functional diagram showing an example of a workpiece between a non-compliant stamping surface and a compliant stamping surface in a system for stamp forming a workpiece;
Fig. 5 is a cross-sectional functional diagram showing an example of a workpiece between a different another non-compliant stamping surface and the compliant stamping surface in another system for stamp forming a workpiece;
Fig. 6 is a flow diagram of an example of a method for stamp forming a workpiece;
Fig. 7, in combination with Fig. 6, is a flow diagram of another example of a method for stamp forming a workpiece;
Fig. 8, in combination with Fig. 6, is a flow diagram of yet another example of a method for stamp forming a workpiece;
Fig. 9, in combination with Fig. 6, is a flow diagram of still another example of a method for stamp forming a workpiece;
Fig. 10 is a block diagram of aircraft production and service methodology; and
Fig. 11 is a schematic illustration of an aircraft.

### DETAILED DESCRIPTION

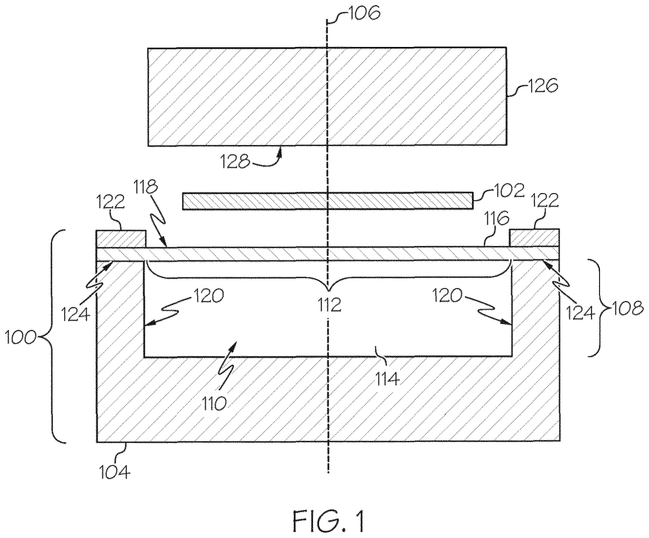

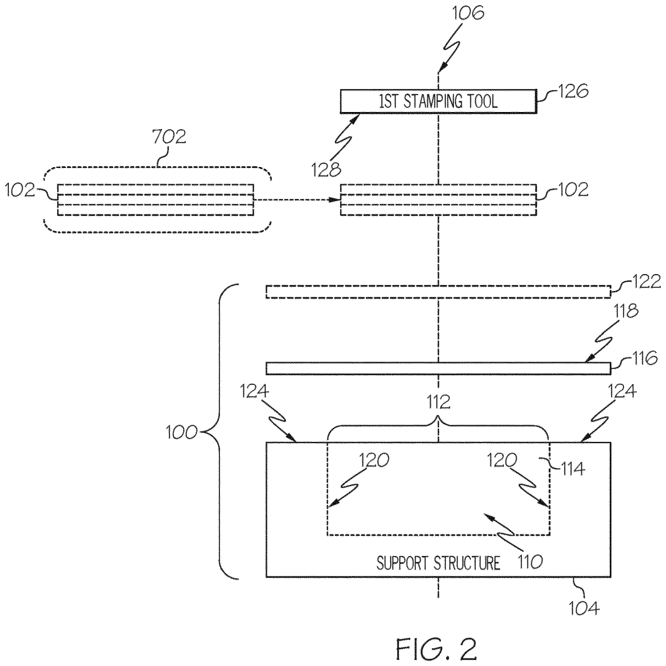

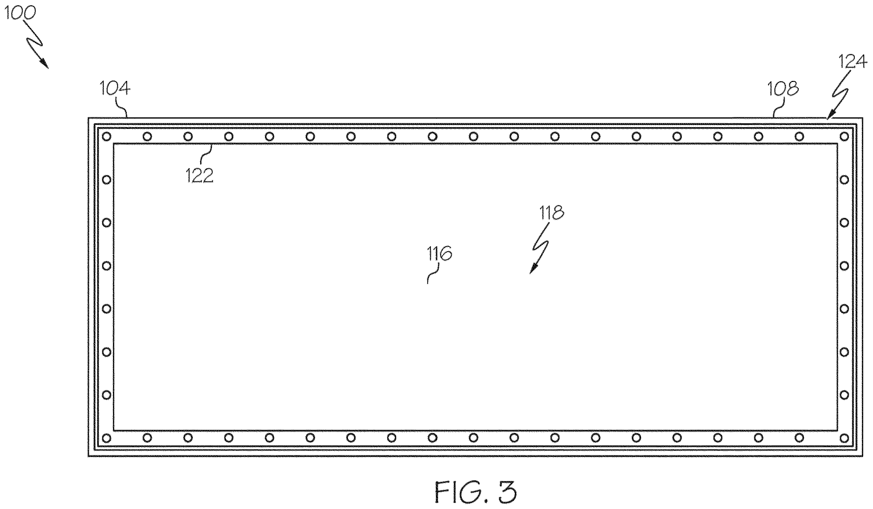

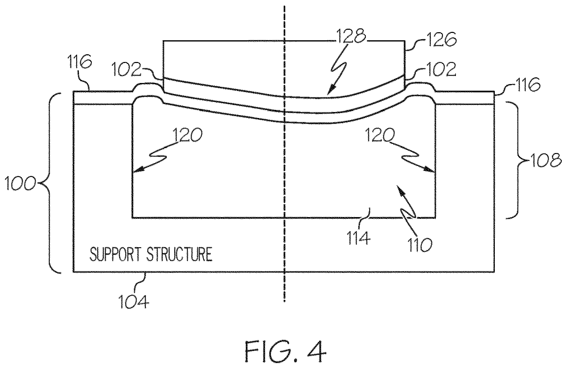

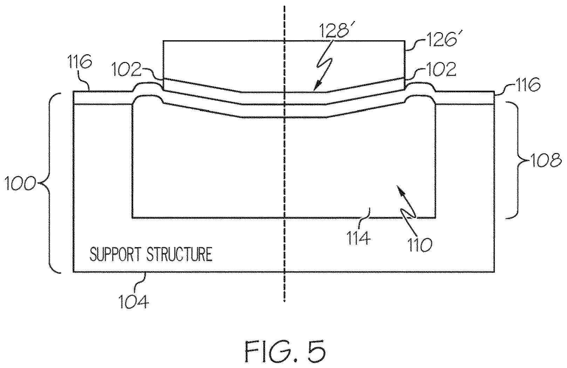

Referring generally to Figs. 1-5, by way of examples, the present disclosure is directed to a compliant stamping tool 100 for stamp forming a workpiece 102. Figs. 1 and 2 disclose examples of a system for stamp forming a work piece that includes a compliant stamping tool 100 and a first stamping tool 126. Fig. 3 discloses a view of a compliant stamping surface 118 of a compliant stamping tool 100. Fig. 4 discloses an example of a workpiece between a non-compliant stamping surface and a compliant stamping surface in a system for stamp forming workpieces. Fig. 5 discloses another example of a workpiece between a different non-compliant stamping surface and the compliant stamping surface in another system for stamp forming a workpiece.

With reference again to Figs. 1-3, in one or more examples, a compliant stamping tool 100 for stamp forming a workpiece 102 includes a support structure 104, a fluid 114 and a deformable membrane 116. The support structure 104 has a thickness along a stamping axis 106. The support structure 104 includes a support wall 108 spaced from the stamping axis 106. The support wall 108 defines a chamber 110 with an opening 112. The fluid 114 is disposed within the chamber 110. The deformable membrane 116 is secured to the support wall 108, covers the opening 112 and seals the fluid 114 within the chamber 110. The deformable membrane 116 defines a compliant stamping surface 118 configured to oppose different non-compliant stamping surfaces of opposing stamping tools.

In another example of the compliant stamping tool 100, the support wall 108 of the support structure 104 defines a depth for the chamber 110 along the stamping axis 106. In yet another example of the compliant stamping tool 100, an inner surface 120 of the support wall 108 defines peripheral limits of the chamber 110 and the opening 112. In still another example of the compliant stamping tool 100, the compliant stamping surface 118 defined by the deformable membrane 116 extends outward from the stamping axis 106.

In still yet another example of the compliant stamping tool 100, the fluid 114 includes rubber particles, silicone rubber particles, urethane rubber particles, natural rubber particles, styrene-butadiene rubber particles, a colloidal suspension, a paste, a gas, dry air, an inert gas, a nitrogen gas, a liquid, a water-based liquid, a mineral-based oil, a synthetic-based oil, a particulate liquid, solid particles, metal particles, plastic particles, mineral particles or any other suitable fluid in any suitable combination.

The term fluid, as used herein, includes a gas, a liquid, a suspension, a colloid, a gel, and a paste. Additionally, the term fluid in this disclosure includes a mixture of particles and air or gas. In this disclosure, particles include small objects, minute quantities, minute fragments, and the like. Use of particle, particulate, grain, and granule is considered interchangeable in relation to this disclosure.

In another example of the compliant stamping tool 100, the deformable membrane 116 includes a rubber material, a thermoplastic elastomer material, a thermoplastic composite material, a thermoset composite material, a reinforced polyimide, a fiber reinforced elastomeric material, a fiberglass material, a silicone material, a particulate filler, reinforcement fibers, metal fibers, short fibers, chopped fibers a rubber matrix material or any other suitable material in any suitable combination.

In yet another example of the compliant stamping tool 100, the deformable membrane 116 is replaceable. For example, replacement of the deformable membrane 116 may be less costly and/or less time consuming than replacement of an elastomeric die or elastomeric components of other types of stamping tools.

In still another example of the compliant stamping tool 100, the workpiece 102 includes a thermoplastic composite material with reinforcement fibers embedded in a thermoplastic matrix material. In other examples, the workpiece 102 may include other types of materials that are suitable for stamp forming.

In still yet another example, the compliant stamping tool 100 also includes mounting hardware 122 securing the deformable membrane 116 to a support surface 124 of the support wall 108 in conjunction with the deformable membrane 116 covering the opening 112 of the chamber 110 and sealing the fluid 114 within the chamber 110. In a further example of the compliant stamping tool 100, the mounting hardware 122 includes a clamp, a bracket, a plate, a snap ring, a fastener, a bolt, a screw, a threaded stud, a nut or any other suitable mounting hardware in any suitable combination.

With continued reference to Figs. 1-3, in one or more examples, a system for stamp forming a workpiece 102 includes the compliant stamping tool 100 and a first stamping tool 126. The first stamping tool 126 has a thickness along the stamping axis 106. The first stamping tool 126 defines a first non-compliant stamping surface 128. In another example of the system, the first non-compliant stamping surface 128 extends outward from the stamping axis 106.

With reference again to Fig. 4, in one or more examples of the system for stamp forming the workpiece 102, the deformable membrane 116 of the compliant stamping tool 100 is configured to conform to the first non-compliant stamping surface 128 and the fluid 114 is configured to displace in response to engagement of the first non-compliant stamping surface 128 and the compliant stamping surface 118 with the workpiece 102.

With reference again to Fig. 5, in one or more examples of the system for stamp forming the workpiece 102, the system also includes a second stamping tool 126'. The second stamping tool 126' has a thickness along the stamping axis 106. The second stamping tool 126' defines a second non-compliant stamping surface 128'. The second non-compliant stamping surface 128' is different from the first non-compliant stamping surface 128. In this example, the compliant stamping surface 118 of the deformable membrane 116 is configured to oppose the second non-compliant stamping surface 128' of the second stamping tool 126'. In another example of the system, the second non-compliant stamping surface 128' extends outward from the stamping axis 106. In yet another example of the system, the deformable membrane 116 of the compliant stamping tool 100 is configured to conform to the second non-compliant stamping surface 128' and the fluid 114 is configured to displace in response to engagement of the second non-compliant stamping surface 128' and the compliant stamping surface 118 with the workpiece 102.

Use of the compliant stamping tool 100 with the second stamping tool 126' demonstrates that the same compliant stamping tool 100 used with the first stamping tool 126 can be used with multiple stamping tools. Thus, the compliant stamping tool 100 is reconfigurable. In other words, the compliant stamping surface 118 of the compliant stamping tool 100 can deform to a desired geometry of the first non-compliant stamping surface 128, another desired geometry of the second non-compliant stamping surface 128', and other desired geometries of other non-compliant stamping surfaces.

With reference again to Figs. 1-3, in one or more examples, a system for stamp forming a workpiece 102 includes a first stamping tool 126 and a compliant stamping tool 100. The first stamping tool 126 has a thickness along a stamping axis 106. The first stamping tool 126 defines a first non-compliant stamping surface 128 extending from the stamping axis 106. The compliant stamping tool 100 has a thickness along the stamping axis 106. The compliant stamping tool 100 includes a support structure 104, a fluid 114 and a deformable membrane 116. The support structure 104 has a thickness along the stamping axis 106. The support structure 104 includes a support wall 108 spaced from the stamping axis 106. The support wall 108 defines a chamber 110 with an opening 112. The fluid 114 is disposed within the chamber 110. The deformable membrane 116 is secured to the support wall 108, covers the opening 112 and seals the fluid 114 within the chamber 110. The deformable membrane 116 defines a compliant stamping surface 118 opposing the first non-compliant stamping surface 128.

In another example of the system, the support wall 108 of the support structure 104 defines a depth for the chamber 110 along the stamping axis 106. In yet another example of the system, an inner surface 120 of the support wall 108 defines peripheral limits of the chamber 110 and the opening 112. In still another example of the system, the first non-compliant stamping surface 128 extends outward from the stamping axis 106. In still yet another example of the system, the compliant stamping surface 118 defined by the deformable membrane 116 extends outward from the stamping axis 106.

In another example of the system, the fluid 114 includes rubber particles, silicone rubber particles, urethane rubber particles, natural rubber particles, styrene-butadiene rubber particles, a colloidal suspension, a paste, a gas, dry air, an inert gas, a nitrogen gas, a liquid, a water-based liquid, a mineral-based oil, a synthetic-based oil, a particulate liquid, solid particles, metal particles, plastic particles, mineral particles or any other suitable fluid in any suitable combination.

In yet another example of the system, the deformable membrane 116 includes a rubber material, a thermoplastic elastomer material, a thermoplastic composite material, a thermoset composite material, a reinforced polyimide, a fiber reinforced elastomeric material, a fiberglass material, a silicone material, a particulate filler, reinforcement fibers, metal fibers, short fibers, chopped fibers, a rubber matrix material or any other suitable material in any suitable combination.

In still another example of the system, the deformable membrane 116 is replaceable. For example, replacement of the deformable membrane 116 may be less costly and/or less time consuming than replacement of an elastomeric die or elastomeric components of other types of stamping tools.

In still yet another example of the system, the workpiece 102 includes a thermoplastic composite material with reinforcement fibers embedded in a thermoplastic matrix material. In a further example, the workpiece 102 is preheated to at least a predetermined melting temperature of the thermoplastic matrix material of the workpiece 102. In another further example, the system also includes at least one heater configured to preheat the first stamping tool 126 and the compliant stamping tool 100 to a predetermined solidification temperature of the thermoplastic matrix material of the workpiece 102.

In yet another further example, approximating of the first stamping tool 126 and the compliant stamping tool 100 is performed at a predetermined pressure for consolidation of the thermoplastic composite material between the first non-compliant stamping surface 128 of the first stamping tool 126 and the compliant stamping surface 118 of the deformable membrane 116. In an even further example, the predetermined pressure is about 2757.9 kPa (about 400 psi) or higher, about 2068.4 kPa (about 300 psi) or higher, about 1378.9 kPa (about 200 psi) or higher, about 689.5 kPa (about 100 psi)or higher or any other suitable pressure limit.

In another example of the system, the compliant stamping tool 100 also includes mounting hardware 122 securing the deformable membrane 116 to a support surface 124 of the support wall 108 in conjunction with the deformable membrane 116 covering the opening 112 of the chamber 110 and sealing the fluid 114 within the chamber 110. In a further example of the compliant stamping tool 100, the mounting hardware 122 includes a clamp, a bracket, a plate, a snap ring, a fastener, a bolt, a screw, a threaded stud, a nut or any other suitable mounting hardware in any suitable combination.

With reference again to Fig. 4, in one or more examples of the system, the deformable membrane 116 of the compliant stamping tool 100 is configured to conform to the first non-compliant stamping surface 128 and the fluid 114 is configured to displace in response to engagement of the first non-compliant stamping surface 128 and the compliant stamping surface 118 with the workpiece 102.

With reference again to Fig. 5, in one or more examples of the system, the system also includes a second stamping tool 126'. The second stamping tool 126' has a thickness along the stamping axis 106. The second stamping tool 125' defines a second non-compliant stamping surface 128'. The second non-compliant stamping surface 128' being different from the first non-compliant stamping surface 128. In this example, the compliant stamping surface 118 of the deformable membrane 116 is configured to oppose the second non-compliant stamping surface 128' of the second stamping tool 126'. In another example of the system, the second non-compliant stamping surface 128' extends outward from the stamping axis 106. In yet another example of the system, the deformable membrane 116 of the compliant stamping tool 100 is configured to conform to the second non-compliant stamping surface 128' and the fluid 114 is configured to displace in response to engagement of the second non-compliant stamping surface 128' and the compliant stamping surface 118 with the workpiece 102.

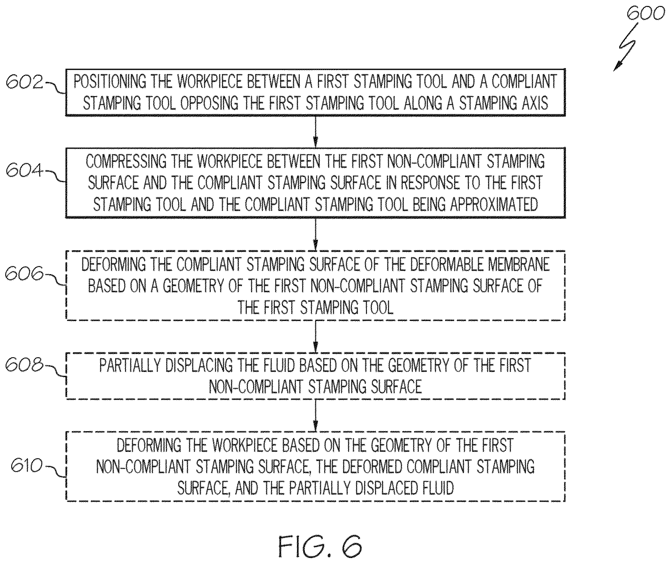

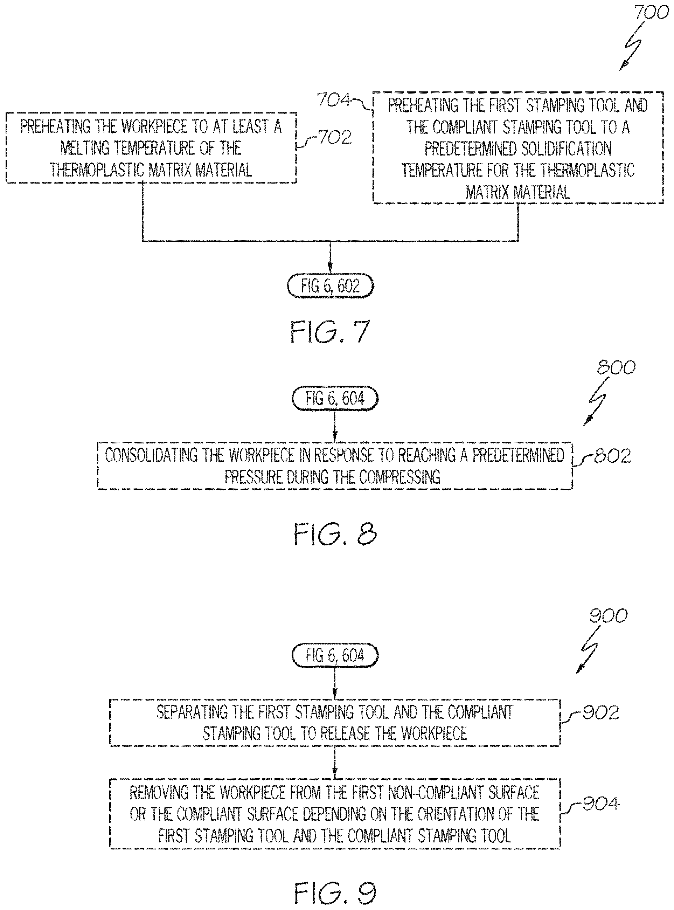

Referring generally to Figs. 6-9, by way of examples, the present disclosure is directed to a method 600, 700, 800, 900 for stamp forming a workpiece 102. Optional features in Figs. 6-9 are depicted in dashed blocks of the flow diagrams. Fig. 6 discloses several examples of the method 600. Fig. 7, in combination with Fig. 6, discloses several more examples of the method 700. Fig. 8, in combination with Fig. 6, discloses another example of the method 800. Fig. 9, in combination with Fig. 6, discloses yet another example of the method 900.

With reference again to Figs. 1, 2 and 6, in one or more examples, a method 600 for stamp forming a workpiece 102 begins at 602 where the workpiece 102 is positioned between a first stamping tool 126 and a compliant stamping tool 100 opposing the first stamping tool 126 along a stamping axis 106. The compliant stamping tool 100 includes a support structure 104 with a support wall 108 spaced from the stamping axis 106. The support wall 108 defines a chamber 110 with an opening 112. The compliant stamping tool 100 also includes a fluid 114 disposed within the chamber 110 and a deformable membrane 116 secured to the support wall 108. The deformable membrane 116 covers the opening 112 and seals the fluid 114 within the chamber 110. The first stamping tool 126 defines a first non-compliant stamping surface 128 and the deformable membrane 116 defines a compliant stamping surface 118 opposing the first non-compliant stamping surface 128. At 604, the workpiece 102 is compressed between the first non-compliant stamping surface 128 and the compliant stamping surface 118 in response to the first stamping tool 126 and the compliant stamping tool 100 being approximated.

In another example, in response to reaching a predetermined pressure during the compressing 604, the method 600 also includes deforming 606 the compliant stamping surface 118 of the deformable membrane 116 based on a geometry of the first non-compliant stamping surface 128 of the first stamping tool 126. At 608, the fluid 114 is partially displaced based on the geometry of the first non-compliant stamping surface 128. At 610, the workpiece 102 is deformed based on the geometry of the first non-compliant stamping surface 128, the deformed compliant stamping surface 118 and the partially displaced fluid 114. In a further example, the predetermined pressure is about 2757.9 kPa (about 400 psi) or higher, about 2068.4 kPa (about 300 psi) or higher, about 1378.9 kPa (about 200 psi) or higher, about 689.5 kPa (about 100 psi)or higher or any other suitable pressure limit. In another further example, the geometry of the first non-compliant stamping surface 128 includes a flat portion, a contour portion, a protruding portion, a ramping portion, a declining portion, a stepping portion, a convex portion or any other suitable geometrical portion in any suitable combination.

With reference again to Figs. 1, 2, 6 and 7, in one or more examples of a method 700 (see Fig. 7) for stamp forming a workpiece 102, the workpiece 102 includes a thermoplastic composite material with reinforcement fibers embedded in a thermoplastic matrix material. The method 700 includes the method 600 of Fig. 6. The method 700 begins at 702 and/or 704. At 702, the workpiece 102 is preheated to at least a predetermined melting temperature of the thermoplastic matrix material. In another example of the method 700, the predetermined melting temperature ranges between about 300° C and about 500° C, about 300° C and about 400° C, about 300° C and about 360° C or any other suitable temperature range. At 704 of the method 700, the first stamping tool 126 and the compliant stamping tool 100 are preheated to a predetermined solidification temperature for the thermoplastic matrix material. In yet another example of the method, the predetermined solidification temperature ranges between about 200° C and about 300° C, about 250° C and about 300° C or any suitable temperature range. After 702 and/or 704, the method 700 advances to 602 of Fig. 6.

With reference again to Figs. 1, 2, 6 and 8, in one or more examples of a method 800 (see Fig. 8) for stamp forming a workpiece 102, the workpiece 102 includes a thermoplastic composite material with reinforcement fibers embedded in a thermoplastic matrix material. The method 800 includes the method 600 of Fig. 6. The method 800 continues from 604 of Fig. 6 to 802 where the workpiece 102 is consolidated in response to reaching a predetermined pressure during the compressing 604. In another example of the method 800, the predetermined pressure is about 2757.9 kPa (about 400 psi) or higher, about 2068.4 kPa (about 300 psi) or higher, about 1378.9 kPa (about 200 psi) or higher, about 689.5 kPa (about 100 psi)or higher, or any other suitable pressure limit.

With reference again to Figs. 1, 2, 6 and 9, in one or more examples, a method 900 (see Fig. 9) for stamp forming a workpiece includes the method 600 of Fig. 6. The method 900 continues from 604 of Fig. 6 to 902 where the first stamping tool 126 and the compliant stamping tool 100 are separated to release the workpiece 102. At 904, the workpiece 102 is removed from between the first non-compliant stamping surface 128 and the compliant stamping surface 118.

Examples of compliant stamping tools 100, systems and methods 600, 700, 800, 900 for stamp forming a workpiece 102 may be related to or used in the context of aircraft manufacturing. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to the use of stamped workpieces in the manufacture of various types of vehicles and in the construction of various types of buildings.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of," when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations. As used herein, the term "and/or" and the "/" symbol includes any and all combinations of one or more of the associated listed items.

As used herein, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

Figs. 1-5, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 1-5, referred to above, need be included in every example and not all elements, features, and/or components described herein are necessarily depicted in each illustrative example. Accordingly, some of the elements, features, and/or components described and illustrated in Figs. 1-5 may be combined in various ways without the need to include other features described and illustrated in Figs. 1-5, other drawing figures, and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 1-5, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 1-5, and such elements, features, and/or components may not be discussed in detail herein with reference to each of Figs. 1-5. Similarly, all elements, features, and/or components may not be labeled in each of Figs. 1-5, but reference numerals associated therewith may be utilized herein for consistency.

In Figs. 6-9, referred to above, the blocks may represent operations, steps, and/or portions thereof, and lines connecting the various blocks do not imply any particular order or dependency of the operations or portions thereof. It will be understood that not all dependencies among the various disclosed operations are necessarily represented. Figs. 6-9 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but does not necessarily, refer to the same example.

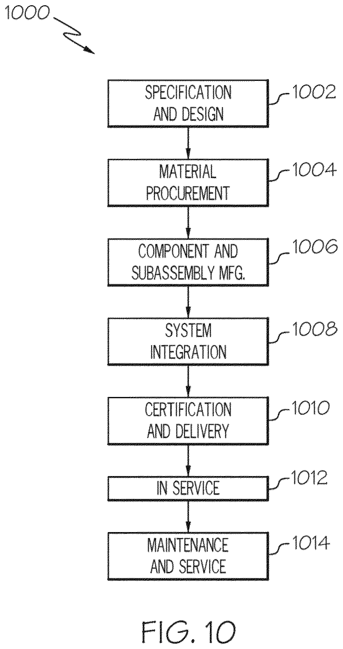

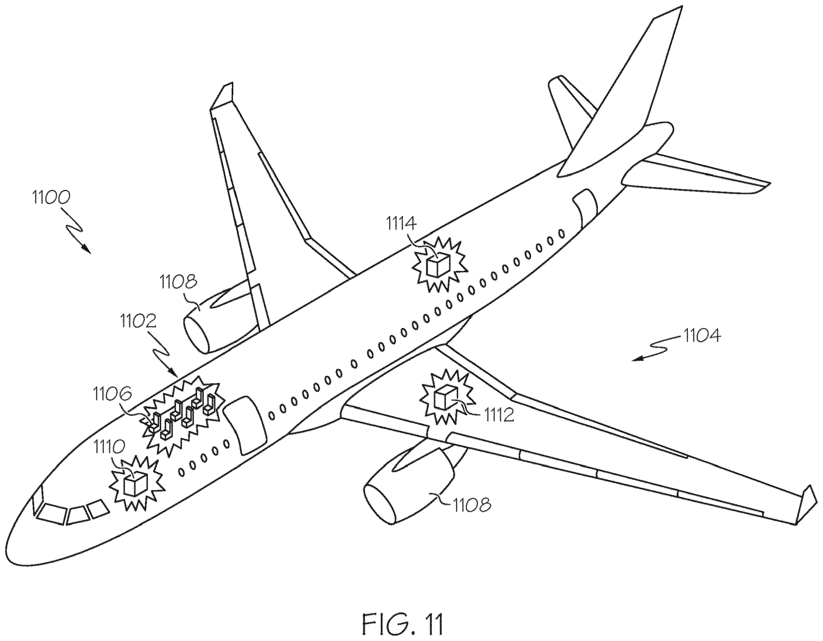

Examples of the subject matter disclosed herein may be described in the context of aircraft manufacturing and service method 1000 as shown in Fig. 10 and aircraft 1100 as shown in Fig. 11. In one or more examples, the disclosed methods and systems for associating test data for a part under test with an end item coordinate system may be used in aircraft manufacturing. During pre-production, the service method 1000 may include specification and design (block 1002) of aircraft 1100 and material procurement (block 1004). During production, component and subassembly manufacturing (block 1006) and system integration (block 1008) of aircraft 1100 may take place. Thereafter, aircraft 1100 may go through certification and delivery (block 1010) to be placed in service (block 1012). While in service, aircraft 1100 may be scheduled for routine maintenance and service (block 1014). Routine maintenance and service may include modification, reconfiguration, refurbishment, etc. of one or more systems of aircraft 1100.

Each of the processes of the service method 1000 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in Fig. 11, aircraft 1100 produced by the service method 1000 may include airframe 1102 with a plurality of high-level systems 1104 and interior 1106. Examples of high-level systems 1104 include one or more of propulsion system 1108, electrical system 1110, hydraulic system 1112, and environmental system 1114. Any number of other systems may be included. Although an aerospace example is shown, the principles disclosed herein may be applied to other industries, such as the automotive industry. Accordingly, in addition to aircraft 1100, the principles disclosed herein may apply to other vehicles, e.g., land vehicles, marine vehicles, space vehicles, etc.

The disclosed systems and methods for associating test data for a part under test with an end item coordinate system may be employed during any one or more of the stages of the manufacturing and service method 1000. For example, components or subassemblies corresponding to component and subassembly manufacturing (block 1006) may be fabricated or manufactured in a manner similar to components or subassemblies produced while aircraft 1100 is in service (block 1012). Also, one or more examples of the system(s), method(s), or combination thereof may be utilized during production stages (block 1006 and block 1008), for example, by substantially expediting assembly of or reducing the cost of aircraft 1100. Similarly, one or more examples of the system or method realizations, or a combination thereof, may be utilized, for example and without limitation, while aircraft 1100 is in service (block 1012) and/or during maintenance and service (block 1014).

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the compliant stamping tool 100, system, and methods 600, 700, 800, 900 for stamp forming a workpiece 102 have been shown and described, modifications may occur to those skilled in the art upon reading the specification. The present application includes such modifications and is limited only by the scope of the claims.

## Claims

1. A compliant stamping tool (100) for stamp forming a workpiece (102), the compliant stamping tool comprising:
a support structure (104) having a thickness along a stamping axis (106) and comprising a support wall (108) spaced from the stamping axis (106), the support wall (108) defining a chamber (110) with an opening (112);
a fluid (114) disposed within the chamber (110); and
a deformable membrane (116) secured to the support wall (108), covering the opening (112) and sealing the fluid (114) within the chamber (110), the deformable membrane (116) defining a compliant stamping surface (118) configured to oppose different non-compliant stamping surfaces (128) of opposing stamping tools (126).

2. The compliant stamping tool of claim 1, wherein:
the support wall (108) of the support structure (104) defines a depth for the chamber (110) along the stamping axis (106); and/or
an inner surface (120) of the support wall (108) defines peripheral limits of the chamber (110) and the opening (112); and/or
the compliant stamping surface (118) defined by the deformable membrane (116) extends outward from the stamping axis (106); and/or
wherein the deformable membrane (116) is replaceable.

3. The compliant stamping tool of any one of the preceding claims, wherein:
the fluid (114) comprises at least one of rubber particles, silicone rubber particles, urethane rubber particles, natural rubber particles, styrene-butadiene rubber particles, a colloidal suspension, a paste, a gas, dry air, an inert gas, a nitrogen gas, a liquid, a water-based liquid, a mineral-based oil, a synthetic-based oil, a particulate liquid, solid particles, metal particles, plastic particles and mineral particles; and/or
the deformable membrane (116) comprises at least one of a rubber material, a thermoplastic elastomer material, a thermoplastic composite material, a thermoset composite material, a reinforced polyimide, a fiber reinforced elastomeric material, a fiberglass material, a silicone material, a particulate filler, reinforcement fibers, metal fibers, short fibers, chopped fibers and a rubber matrix material.

4. The compliant stamping tool of any one of the preceding claims, wherein the workpiece (102) comprises a thermoplastic composite material with reinforcement fibers embedded in a thermoplastic matrix material.

5. The compliant stamping tool of any one of the preceding claims, further comprising:
a mounting hardware (122) securing the deformable membrane (116) to a support surface (124) of the support wall (108) in conjunction with the deformable membrane (116) covering the opening (112) of the chamber (110) and sealing the fluid (114) within the chamber (110), preferably wherein the mounting hardware (122) includes at least one of a clamp, a bracket, a plate, a snap ring, a fastener, a bolt, a screw, a threaded stud and a nut.

6. A system for stamp forming a workpiece (102), the system comprising:
the compliant stamping tool (100) of any one of claims 1-10; and
a first stamping tool (126) having a thickness along the stamping axis (106) and defining a first non-compliant stamping surface (128), preferably wherein:
the first non-compliant stamping surface (128) extends outward from the stamping axis (106); and/or
the deformable membrane (116) of the compliant stamping tool (100) is configured to conform to the first non-compliant stamping surface (128) and the fluid (114) is configured to displace in response to engagement of the first non-compliant stamping surface (128) and the compliant stamping surface (118) with the workpiece (102).

7. The system of claim 6, further comprising:
a second stamping tool (126') having a thickness along the stamping axis (106) and defining a second non-compliant stamping surface (128'), the second non-compliant stamping surface (128') being different from the first non-compliant stamping surface (128),
wherein the compliant stamping surface (118) of the deformable membrane (116) is configured to oppose the second non-compliant stamping surface (128') of the second stamping tool (126'), preferably wherein:
the second non-compliant stamping surface (128') extends outward from the stamping axis (106), and/or
the deformable membrane (116) of the compliant stamping tool (100) is configured to conform to the second non-compliant stamping surface (128') and the fluid (114) is configured to displace in response to engagement of the second non-compliant stamping surface (128') and the compliant stamping surface (118) with the workpiece (102).

8. The system of claim 6 or 7, wherein:
the first non-compliant stamping surface (128) extends from the stamping axis (106); and
the compliant stamping tool (100) has a thickness along the stamping axis (106), the compliant stamping tool (100), wherein:
the compliant stamping surface (118) opposes the first non-compliant stamping surface (128).

9. The system of any one of claims 6-8, when dependent upon claim 4, wherein the workpiece (102) is preheated to at least a predetermined melting temperature of the thermoplastic matrix material of the workpiece (102), wherein preferably:
the system further comprises at least one heater configured to preheat the first stamping tool (126) and the compliant stamping tool (100) to a predetermined solidification temperature of the thermoplastic matrix material of the workpiece (102); and/or
approximating of the first stamping tool (126) and the compliant stamping tool (100) is performed at a predetermined pressure for consolidation of the thermoplastic composite material between the first non-compliant stamping surface (128) of the first stamping tool (126) and the compliant stamping surface (118) of the deformable membrane (116), preferably wherein the predetermined pressure is at least one of about 2757.9 kPa (about 400 psi) or higher, about 2068.4 kPa (about 300 psi) or higher, about 1378.9 kPa (about 200 psi) or higher, and about 689.5 kPa (about 100 psi) or higher.

10. A method for stamp forming a workpiece (102), the method comprising:
placing the workpiece (102) between a first stamping tool (126) and a deformable membrane (116); and
forming the workpiece (102) between the first stamping tool (126) which is non-compliant and the deformable membrane (116) which is compliant.

11. The method of claim 10, wherein:
the forming of the workpiece (102) is based at least in part on using hydrostatic pressure in conjunction with the deformable membrane (116) to ensure uniform surface pressure distributions on the workpiece (102); and/or
the deformable membrane (116) is reconfigurable which enables use of the deformable membrane (116) with multiple non-compliant geometries of the first stamping tool (126).

12. The method (600) for stamp forming a workpiece (102) according to claim 10 or 11, wherein:
the step of placing the workpiece (102) between the first stamping tool (126) and the deformable membrane (116) comprises positioning (602) the workpiece (102) between the first stamping tool (126) defining a first non-compliant stamping surface (128) and a compliant stamping tool (100) opposing the first stamping tool (126), the compliant stamping tool (100) having the deformable membrane (116) defining a compliant stamping surface (118) opposing the first non-compliant stamping surface (128); and
the step of forming the workpiece (102) between the first stamping tool (126) which is non-compliant and the deformable membrane (116) which is compliant comprises compressing (604) the workpiece (102) between the first non-compliant stamping surface (128) and the compliant stamping surface (118) in response to the first stamping tool (126) and the compliant stamping tool (100) being approximated;
deforming (606) the compliant stamping surface (118) of the deformable membrane (116) based on a geometry of the first non-compliant stamping surface (128) of the first stamping tool (126);
partially displacing (608) the fluid (114) based on the geometry of the first non-compliant stamping surface (128); and
deforming (610) the workpiece (102) based on the geometry of the first non-compliant stamping surface (128), the deformed compliant stamping surface (118) and the partially displaced fluid (114), and preferably wherein:
the compliant stamping tool (100) opposes the first stamping tool (126) along a stamping axis (106).

13. The method of claim 12, wherein the compliant stamping tool (100) comprises a support structure (104) with a support wall (108) spaced from the stamping axis (106), the support wall (108) defining a chamber (110) with an opening (112), the compliant stamping tool (100) further comprising a fluid (114) disposed within the chamber (110) and the deformable membrane (116) secured to the support wall (108), covering the opening (112) and sealing the fluid (114) within the chamber (110), the first stamping tool (126) defining the first non-compliant stamping surface (128) and the deformable membrane (116) defining the compliant stamping surface (118), preferably wherein:
the geometry of the first non-compliant stamping surface (128) comprises at least one of a flat portion, a contour portion, a protruding portion, a ramping portion, a declining portion, a stepping portion and a convex portion.

14. The method of claim 12 or 13, wherein:
the deforming (606) of the compliant stamping surface (118), the partial displacing (608) of the fluid (114) and the deforming (610) of the workpiece (102) are in response to reaching a predetermined pressure during the compressing (604), preferably wherein the predetermined pressure is at least one of about 2757.9 kPa (about 400 psi) or higher, about 2068.4 kPa (about 300 psi) or higher, about 1378.9 kPa (about 200 psi) or higher, and about 689.5 kPa (about 100 psi) or higher; and/or
the workpiece (102) comprises a thermoplastic composite material with reinforcement fibers embedded in a thermoplastic matrix material, wherein the method preferably further comprises: preheating (702) the workpiece (102) to at least a predetermined melting temperature of the thermoplastic matrix material, wherein the predetermined melting temperature preferably ranges between at least one of about 300° C and about 500° C, about 300° C and about 400° C and about 300° C and about 360° C.

15. The method of claim 14, further comprising:
preheating (704) the first stamping tool (126) and the compliant stamping tool (100) to a predetermined solidification temperature for the thermoplastic matrix material, wherein the predetermined solidification temperature preferably ranges between at least one of about 200° C and about 300° C and about 250° C and about 300° C; and/or
consolidating (802) the workpiece (102) in response to reaching a predetermined pressure during the compressing (604), wherein the predetermined pressure is preferably at least one of about 2757.9 kPa (about 400 psi) or higher, about 2068.4 kPa (about 300 psi) or higher, about 1378.9 kPa (about 200 psi) or higher, and about 689.5 kPa (about 100 psi) or higher; and/or
separating (902) the first stamping tool (126) and the compliant stamping tool (100) to release the workpiece (102), and removing (904) the workpiece (102) from between the first non-compliant stamping surface (128) and the compliant stamping surface (118).
